# FASCICULE DE BREVET EUROPEEN

(11) **EP 0 704 329 B1**
(45) Date de publication et mention de la délivrance du brevet: **01.12.1999**
(21) Numéro de dépôt: 95115042.4
(22) Date de dépôt: 25.09.1995
(51) Int. Cl.: B60H 1/00, B60K 37/00

(54) **Dispositif de chauffage et/ou climatisation de véhicule automobile**
Heizungs- und/oder Klimaanlage für ein Kraftfahrzeug
Heating and/or air conditioning unit for a motor vehicle

(30) Priorité: 28.09.1994 FR 9411598
(43) Date de publication de la demande: 03.04.1996
(73) Titulaire: VALEO CLIMATISATION, 78321 La Verrière (FR)
(72) Inventeur: Danieau, Jacques, F-78590 Noisy Le Roi (FR)
(74) Mandataire: Gamonal, Didier

(56) Documents cités:
- EP-A- 0 607 585
- DE-A- 3 143 503
- FR-A- 2 385 554
- FR-A- 2 615 148
- FR-A- 2 623 776
- DATABASE WPI Week 2786 Derwent Publications Ltd., London, GB; AN 86-170227 & DE-A-34 47 185 (FORD-WERKE AG)

## Description

L'invention concerne un dispositif de chauffage et/ou climatisation de véhicule automobile.

En général, un tel dispositif comprend des organes de traitement de l'air logés au moins en partie dans le compartiment moteur du véhicule, ainsi que des conduits pour acheminer l'air issu des organes de traitement au niveau de buses de sortie logées principalement dans des orifices de la planche de bord du véhicule et aptes à distribuer cet air dans l'habitacle dudit véhicule.

Les conduits utilisés sont généralement souples, difficiles à mettre en place, en raison du manque d'espace disponible, et surtout ils génèrent des vibrations qui nuisent au confort des passagers.

Pour tenter de remédier à ces inconvénients, la Demanderesse a proposé, dans son Brevet FR-2 615 148, un corps d'appareil lié de façon rigide aux organes de traitement et comprenant des buses de sortie destinées à venir dans les régions latérales de l'habitacle, et des moyens de canalisation de l'air entre les organes de traitement et lesdites buses, l'ensemble formé par les moyens de canalisation et les buses associées étant monobloc.

Selon cette solution connue, des moyens de fixation sont prévus sur les moyens de canalisation pour permettre la fixation d'une planche de bord, et d'une façade. Par ailleurs, des orifices sont prévus dans le corps d'appareil rigide pour autoriser l'insertion de tableaux de commande.

Dans un tel dispositif, une partie des organes de traitement est logée dans l'habitacle entre la cloison moteur et le corps d'appareil rigide.

Cette solution connue permet d'une part de simplifier le montage d'une partie de l'installation de chauffage et/ou climatisation et d'autre part de limiter les vibrations générées par les conduits souples.

Cependant, un tel dispositif ne permet d'acheminer l'air traité qu'au niveau des buses d'aération, les buses de dégivrage/désembuage étant toujours alimentées par des conduits souples. Par ailleurs, ce corps d'appareil occupe la quasi-totalité de la largeur du véhicule, sous la planche de bord, ce qui limite notablement le nombre d'équipements et/ou de tableaux de commande pouvant être logés dans ladite planche de bord.

Enfin, une façade formant élément de style est nécessaire à l'habillage du corps d'appareil rigide.

Dans le document FR-A-2 385 554, il est décrit un dispositif de chauffage/climatisation comprenant un premier module comportant des moyens de traitement et de distribution d'air logés au moins en partie dans un boîtier muni de sorties d'air débouchant dans une face supérieure de forme déterminée dudit boîtier, et un second module formant planche de bord, laquelle planche comporte une face inférieure de forme conjuguée de celle de la face supérieure dudit boîtier, pour s'adapter à ladite face supérieure, de telle sorte que les premier et second modules réalisent un assemblage modulaire sensiblement rigide, une façade munie de buses aptes à diffuser l'air dans l'habitacle, des conduits intégrés présentant des entrées débouchant sur la face inférieure de ladite planche et propres à coopérer à étanchéité avec les sorties d'air de la face supérieure du boîtier et ainsi que des sorties débouchant sur lesdites buses, et des moyens de support propres à supporter au moins le second module.

Dans ce dispositif, il est à noter que les deux modules sont supportés, comme connu en soi, par la cloison longitudinale qui sépare habituellement le compartiment moteur de l'habitacle, ce qui entraîne un aménagement spécifique de cette cloison pour, d'une part, pouvoir supporter le poids du dispositif de chauffage/climatisation et, d'autre part, loger un tel dispositif.

Dans la demande de brevet français N° 2623 776, il est plus particulièrement décrit la réalisation selon laquelle une poutre transversale est apte à supporter la planche de bord, cette poutre s'étendant sur toute la largeur du véhicule en étant fixée audit véhicule.

Cette réalisation présente néanmoins un inconvénient majeur dans le sens que, lors du montage, il est très difficile pour l'opérateur de positionner la planche de bord sur la poutre.

Le but de la présente invention est de remédier à ces inconvénients en simplifiant notablement le montage de l'ensemble de l'installation de chauffage et/ou de climatisation dans le véhicule, tout en supprimant les vibrations et en libérant de la place pour loger de nombreux équipements et/ou tableaux de commande dans la planche de bord ainsi que permettre un support adéquat de cette installation.

L'invention propose à cet effet un dispositif de chauffage du type comprenant un premier module comportant des moyens de traitement et de distribution d'air logés au moins en partie dans un boîtier muni de sorties d'air débouchant dans une face supérieure de forme déterminée dudit boîtier, et un second module formant planche de bord, laquelle planche comporte une face inférieure de forme conjuguée à celle de la face supérieure dudit boîtier, pour s'adapter à ladite face supérieure, de telle sorte que les premier et second modules réalisent un assemblage modulaire sensiblement rigide, une façade munie de buses aptes à diffuser l'air dans l'habitacle, des conduits intégrés présentant des entrées débouchant sur la face inférieure de ladite planche et propres à coopérer à étanchéité avec les sorties d'air de la face supérieure du boîtier, ainsi que des sorties débouchant sur lesdites buses, et des moyens de support propres à supporter au moins le second module, caractérisé en ce que les moyens de support comprennent une poutre transversale s'étendant sur toute la largeur du véhicule, et la planche de bord comprend en outre au moins un logement apte à loger une partie au moins de la poutre.

De façon avantageuse, la face supérieure du boîtier du premier module comprend une première sortie d'air propre à délivrer de l'air dans au moins un conduit intégré débouchant sur au moins une buse d'aération logée dans la façade de la planche de bord, et une seconde sortie d'air propre à délivrer de l'air dans au moins un conduit intégré débouchant sur au moins une buse de dégivrage/désembuage logée dans ladite planche de bord.

Selon une autre caractéristique de l'invention, le premier module comprend en outre au moins un conduit menant à au moins une buse d'aération débouchant au niveau des pieds des passagers dans la partie avant du véhicule, de part et d'autre dudit boîtier.

Enfin, la poutre comprend en ses extrémités de premiers moyens de fixation aptes à immobiliser ladite poutre sur la structure du véhicule.

Ainsi, en ayant recours aux seuls moyens de fixation de la poutre sur la structure, la planche de bord se trouve non seulement supportée mais également parfaitement immobilisée par rapport à la structure du véhicule.

Pour renforcer la coopération des modules de l'assemblage, le boîtier comprend en outre de seconds moyens de fixation aptes à immobiliser le premier module sur les moyens de support.

Cette disposition permet d'éviter la fixation du second module sur la cloison moteur, ou à l'intérieur du compartiment moteur, ce qui simplifie notablement le montage du dispositif.

Dans une forme de réalisation préférentielle de l'invention, la planche de bord et les conduits intégrés et logements qu'elle loge sont réalisés par moulage.

Cela permet non seulement d'optimiser les volumes occupés par le dispositif de chauffage et/ou climatisation, mais également d'assurer une excellente rigidité de la planche de bord.

Dans la description qui suit, faite seulement à titre d'exemple, on se réfère aux dessins annexés, sur lesquels :
- la figure 1 est une vue schématique en coupe selon le plan longitudinal médian du véhicule, montrant le dispositif selon l'invention dans une forme de réalisation préférentielle, et
- la figure 2 est une vue éclatée de la figure 1 selon la même coupe.

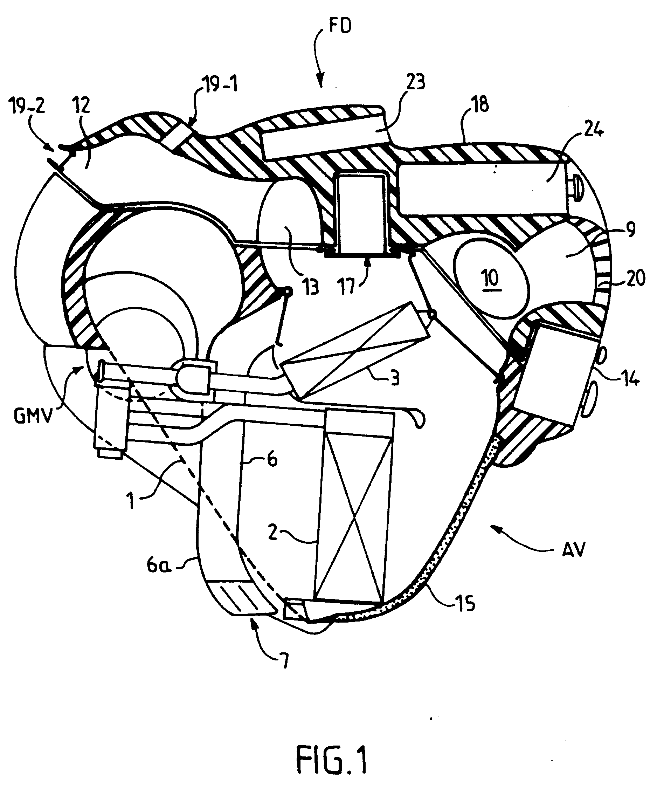

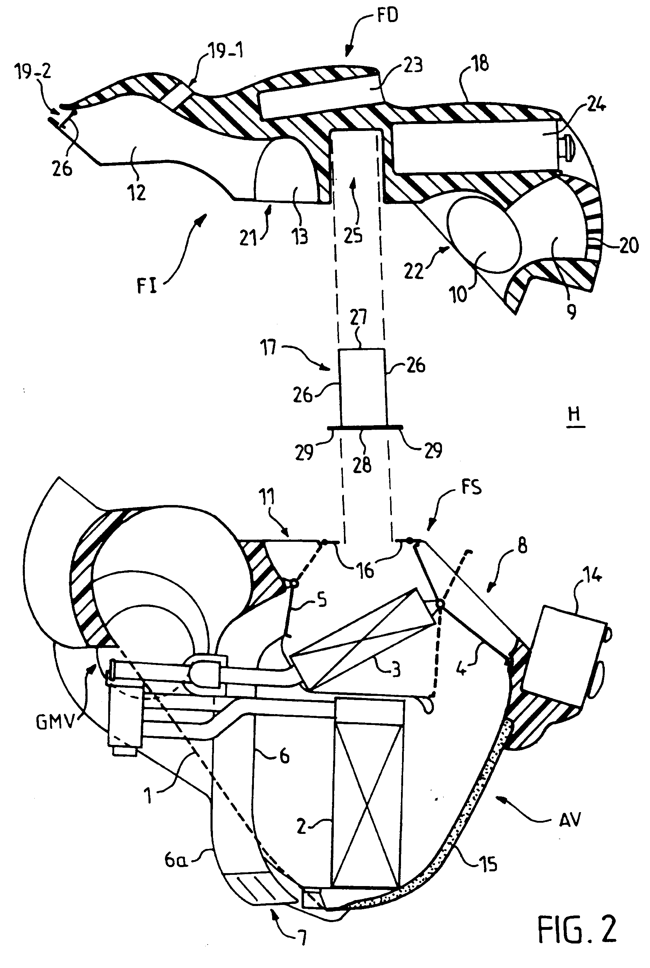

Le dispositif selon l'invention, représenté aux figures 1 et 2, comprend un groupe moto-ventilateur GMV logé en partie dans un boîtier 1 qui fait partie du premier module propre à être installé au moins en partie dans l'habitacle H d'un véhicule automobile. Ce boîtier 1 loge en outre, dans sa partie inférieure, un évaporateur 2 apte à refroidir et déshumidifier l'air issu du groupe moto-ventilateur GMV, et dans sa partie supérieure, un radiateur 3 apte à réchauffer sur commande l'air issu de l'évaporateur 2, ainsi que des volets le mixage et/ou de distribution de l'air 4 et 5.

Le boîtier loge également de façon partielle un conduit 6. Ce conduit 6 se divise en deux sous-conduits 6a qui traversent la paroi du boîtier dans sa partie inférieure. Chaque sous-conduit 6a est terminé par une buse 7 logée dans la partie avant de l'habitacle du véhicule, au niveau des pieds de l'un des passagers, de part et d'autre du boîtier 1.

De façon classique, un volet de mixage et de distribution 4 règle d'une part le mélange d'air chaud et d'air froid, et d'autre part l'accès à une première sortie d'air 8 chargée d'alimenter en air des conduits d'aération 9 et 10. Un volet de distribution 5 commande l'accès aux conduits d'aération pied 6, ainsi qu'à une seconde sortie d'air 11 chargée d'alimenter en air des conduits de dégivrage/désembuage 12 et 13.

Les sorties d'air 8 et 9 débouchent dans une face supérieure FS de forme déterminée prévue au sommet du boîtier 1 pour alimenter les conduits 9, 10, 12 et 13 qui font partie d'un autre module, comme on le verra plus loin.

La face avant AV du boîtier 1 loge dans sa partie supérieure un boîtier 14 de commande de l'installation de chauffage et/ou climatisation. Cette face AV, qui se trouve logée dans 1 'habitacle du véhicule, est recouverte d'un matériau isolant 15 chargé de supprimer tout ou partie des bruits générés par les moyens de traitement et de distribution d'air.

La face supérieure FS du boîtier 1 est munie de moyens de fixation logés entre les sorties d'air 8 et 11, et aptes à l'immobiliser sur des moyens de support 17, décrits plus loin.

Cette intégration des moyens de traitement et de distribution d'air dans le boîtier 1 permet de gagner de la place à la fois dans le compartiment moteur et dans l'habitacle.

Le dispositif selon l'invention comprend en outre une planche de bord 18 constituant un second module et comportant une face inférieure FI de forme conjuguée de la forme de la face supérieure FS du boîtier 1, ce qui lui permet de s'adapter à elle pour réaliser un assemblage modulaire sensiblement rigide.

Ainsi, le boîtier 1 et la planche de bord 18 peuvent être assemblés l'un à l'autre et coopérer entre eux par la face supérieure FS du boîtier et la face inférieure FI de la planche de bord.

Cette planche de bord 18 comprend en outre une face supérieure formant façade FD munie de buses de distribution 19 et 20. Chacune de ces buses est alimentée par un conduit de circulation d'air qui présente chacun une entrée 21 et 22 débouchant sur la face inférieure FI de la planche de bord 18. Ces entrées 21 et 22 sont propres à coopérer à étanchéité avec les sorties d'air 8 et 11 du boîtier 1.

Les buses de distribution 19 sont des buses de dégivrage/désembuage chargées de distribuer de l'air au niveau du pare-brise du véhicule et, le cas échéant, au niveau des glaces latérales du véhicule. Elles sont alimentées par des conduits soit transversaux 12, soit longitudinaux 13, lesquels conduits présentent une entrée 21 commune en regard de la sortie d'air 11 du boîtier 1.

Le conduit transversal 12 s'étend suivant l'axe longitudinal du véhicule, tandis que les conduits longitudinaux 21 s'étendent suivant la perpendiculaire à l'axe longitudinal dudit véhicule. Le conduit 12 est terminé par une buse 19-1 munie d'un volet de distribution 26 permettant de gérer le débit d'air délivré au niveau de la partie inférieure du pare-brise du véhicule.

Les buses d'aération 20 sont alimentées par des conduits transversaux 9 et longitudinaux 10, présentant des entrées 22 en regard de la sortie d'air 8 du boîtier 1.

Le conduit transversal 9 s'étend suivant l'axe longitudinal du véhicule et débouche sur une buse centrale 20 logée dans la façade FD dans un plan médian entre les sièges des deux passagers avant.

Les conduits longitudinaux 10 s'étendent suivant un axe perpendiculaire à l'axe longitudinal du véhicule et alimentent des buses (non représentées sur la figure) logées dans la façade FD, aux extrémités de celle-ci.

Les buses d'aération sont avantageusement munies de volets de distribution formant grilles actionnables manuellement.

La planche de bord 18 comprend également de premiers logements 23 et 24 destinés à loger des tableaux de commande ou des équipements tels qu'une boîte à gant, une radio, un lecteur de disques compacts, etc.

Enfin, la planche de bord 18 comprend également de seconds logements 25 destinés à loger des moyens de support 17 de logements 25 ladite planche de bord 18.

Dans la forme de réalisation représentée, le logement 25 s'étend sur toute la largeur de la planche de bord 18. Sa forme est déterminée par celle des moyens de support 17 qu'il est destiné à loger.

La planche de bord, les conduits intégrés et les logements qu'elle comprend, sont préférentiellement réalisés dans un matériau synthétique rigide, par moulage, ce qui permet de réaliser un élément monobloc en une seule étape de fabrication

Les moyens de support 17 logés dans le logement 25 de la planche de bord 18 forment une poutre transversale s'étendant sur toute la largeur du véhicule suivant un axe perpendiculaire à l'axe longitudinal dudit véhicule.

Cette poutre 17 est préférentiellement de section rectangulaire et réalisée dans un matériau métallique. Elle comprend principalement quatre faces, dont deux latérales 26, une supérieure 27, et une face inférieure 28 de largeur notablement supérieure à la largeur de la face supérieure 27 en regard de laquelle elle se trouve, ce qui autorise la fixation du boîtier 1 sur les bords libres 29 de ladite poutre 17, grâce aux moyens de fixation 16 dudit boîtier 1.

Cette poutre est également constituée de deux faces d'extrémité (non représentées sur les figures), munies chacune de moyens de fixation aptes à immobiliser la poutre 17 sur la structure du véhicule. Cela permet d'immobiliser l'assemblage modulaire par rapport à la structure du véhicule, sans faire appel à de multiples moyens de fixation.

L'invention ne saurait se limiter à cette forme particulière de réalisation.

On peut parfaitement envisager de ne pas utiliser de poutre le support de la planche de bord et du boîtier, en réalisant une planche de bord renforcée suivant l'axe transversal du véhicule. Une telle planche serait évidemment équipée de moyens de fixation aptes à l'immobiliser sur la structure du véhicule.

Il est également envisageable de prévoir dans ladite planche de bord des conduits débouchant, d'une part, dans les logements prévus pour loger les équipements et/ou tableaux de commande, et d'autre part, au niveau de la face inférieure de cette planche de bord, ce qui autoriserait le passage de câbles électriques et/ou de commande permettant la connexion des équipements et/ou tableaux de commande.

A cet effet, la poutre peut être utilisée comme conduit de passage de câbles électriques et/ou de commande des équipements logés dans la planche de bord. il suffit pour cela que les faces de la poutre présentent en des endroits prédéterminés des ouvertures autorisant le passage desdits câbles.

Par ailleurs, l'agencement des moyens de traitement et de distribution de l'air dans le boîtier n'est pas limité à celui décrit précédemment. On pourra envisager d'utiliser un nombre plus ou moins grand de sorties d'air et/ou de volets de mixage ou de distribution.

## Revendications

1. Dispositif de chauffage du type comprenant un premier module comportant des moyens de traitement et de distribution d'air logés au moins en partie dans un boîtier (1) muni de sorties d'air (8,11) débouchant dans une face supérieure (FS) de forme déterminée dudit boîtier, et un second module formant planche de bord (18), laquelle planche comporte une face inférieure (FI) de forme conjuguée à celle de la face supérieure (FS) dudit boîtier (1), pour s'adapter à ladite face supérieure, de telle sorte que les premier et second modules réalisent un assemblage modulaire sensiblement rigide, une façade (FD) munie de buses (19,20) aptes à diffuser l'air dans l'habitacle, des conduits intégrés (9,10,12,13) présentant des entrées (21,22) débouchant sur la face inférieure (FI) de ladite planche (18) et propres à coopérer à étanchéité avec les sorties d'air (11,8) de la face supérieure (FS) du boîtier (1), ainsi que des sorties débouchant sur lesdites buses, et des moyens de support (17) propres à supporter au moins le second module, caractérisé en ce que les moyens de support comprennent une poutre transversale (17) s'étendant sur toute la largeur du véhicule, et la planche de bord (18) comprend en outre au moins un logement (25) apte à loger une partie au moins de la poutre (17).

2. Dispositif selon la revendication 1, caractérisé en ce que la face supérieure (FS) du boîtier (1) du premier module comprend une première sortie (8) d'air propre à délivrer de l'air dans au moins un conduit intégré (9,10) débouchant sur au moins une buse d'aération (20) logée dans la façade (FD) de la planche de bord (18), et une seconde sortie d'air (11) propre à délivrer de l'air dans au moins un conduit intégré (12,13) débouchant sur au moins une buse de dégivrage/désembuage (19) logée dans ladite planche de bord.

3. Dispositif selon la revendication 2, caractérisé en ce que le premier module comprend en outre au moins un conduit (6) menant à au moins une buse d'aération (7) débouchant au niveau des pieds des passagers dans la partie avant du véhicule, de part et d'autre dudit boîtier (1).

4. Dispositif selon l'une des revendications 1 à 3, caractérisé en ce que la poutre (17) comprend en ses extrémités de premiers moyens de fixation aptes à immobiliser ladite poutre sur la structure du véhicule.

5. Dispositif selon l'une des revendications 1 à 4, caractérisé en ce que le boîtier (1) comprend en outre de seconds moyens de fixation (16) aptes à immobiliser ledit premier module sur les moyens de support (17).

6. Dispositif selon l'une des revendications précédentes, caractérisé en ce que la planche de bord (18), et les conduits intégrés (9,10,12,13) et logements (23,25) qu'elle comprend, sont réalisés par moulage.

## Claims

1. Heating apparatus of the type comprising a first module that includes air treatment and distribution means which are at least partly mounted within a casing (1) having air outlets (8, 11) exhausting in an upwardly facing surface (FS), having a predetermined form, of the said casing, and a second module defining a fascia panel (18), which panel has a downwardly facing surface (FI), the form of which is conjugate to that of the upwardly facing surface (FS) of the said casing (1) so as to match the said upwardly facing surface, so that the first and second modules together constitute a substantially rigid modular assembly, a front panel (FD) having vents (19, 20) which are adapted to diffuse air in the cabin, integral ducts (9, 10, 12, 13) having inlets (21, 22) which are open in the downwardly facing surface (FI) of the said fascia panel (18), and which are adapted to cooperate sealingly with the air outlets (11, 8) in the upwardly facing surface (FS) of the casing (1), together with outlets exhausting at the said vents, and support means (17) adapted to support at least the second module, characterised in that the support means comprise a transverse pedestal (17) extending over the whole width of the vehicle, and the fascia panel (18) further includes at least one housing (25) adapted to accommodate at least part of the pedestal (17).

2. Apparatus according to Claim 1, characterised in that the upwardly facing surface (FS) of the casing (1) of the first module has a first air outlet (8) which is arranged to deliver air into at least one integral duct (9, 10) which exhausts in at least one ventilating vent (20) arranged in the front face (FD) of the fascia panel (18), and a second air outlet (11) which is adapted to deliver air into at least one integral duct (12, 13) exhausting in at least one deicing/demisting vent (19) disposed in the said fascia panel.

3. Apparatus according to Claim 2, characterised in that the first module further includes at least one duct (6) leading to at least one ventilating vent (7) which exhausts at the level of the feet of the occupants in the front part of the vehicle, on either side of the said casing (1).

4. Apparatus according to one of Claims 1 to 3, characterised in that the pedestal (17) includes at its ends first fastening means for securing the said pedestal in place on the structure of the vehicle.

5. Apparatus according to one of Claims 1 to 4, characterised in that the casing (1) further includes second fastening means (16) adapted to secure the said first module in position on the support means (17).

6. Apparatus according to one of the preceding Claims, characterised in that the fascia panel (18), and the integral ducts (9, 10, 12, 13) and housings (23, 25) which it includes are made by moulding.

## Patentansprüche

1. Heizungsanlage, umfassend ein erstes Modul mit Luftaufbereitungs- und Luftverteilungsmitteln, die wenigstens teilweise in einem Gehäuse (1) mit Luftauslässen (8, 11) enthalten sind, die in einer Oberseite (FS) mit bestimmter Form des besagten Gehäuses münden, und ein zweites Modul, das ein Armaturenbrett (18) bildet, wobei dieses Armaturenbrett eine Unterseite (FI) mit einer Form umfaßt, die zu derjenigen der Oberseite (FS) des besagten Gehäuses (1) paßt, um sich an die besagte Oberseite anzupassen, so daß die ersten und zweiten Module eine weitestgehend starre modulare Baugruppe bilden, eine Frontplatte (FD) mit Düsen (19, 20), um die Luft in den Fahrgastraum einzuleiten, integrierte Kanäle (9, 10, 12, 13) mit Einlässen (21, 22), die an der Unterseite (FI) des besagten Armaturenbretts (18) münden und dicht mit den Luftauslässen (11, 8) der Oberseite (FS) des Gehäuses (1) zusammenwirken können, sowie mit Auslässen, die an den besagten Düsen münden, und Halterungsmittel (17), um wenigstens das zweite Modul zu haltern, **dadurch gekennzeichnet,** daß die Halterungsmittel einen Querträger (17) umfassen, der sich auf der gesamten Breite des Fahrzeugs erstreckt und das Armaturenbrett (18) außerdem wenigstens eine Aufnahme (25) enthält, um wenigstens einen Teil des Trägers (17) aufzunehmen.

2. Anlage nach Anspruch 1**, dadurch gekennzeichnet,** daß die Oberseite (FS) des Gehäuses (1) des ersten Moduls einen ersten Luftauslaß (8) enthält, um Luft in wenigstens einen integrierten Kanal (9, 10) abzugeben, der an wenigstens einer in der Frontplatte (FD) des Armaturenbretts (18) enthaltenen Belüftungsdüse (20) mündet, und einen zweiten Luftauslaß (11), um Luft in wenigstens einen integrierten Kanal (12, 13) abzugeben, der an wenigstens einer in dem besagten Armaturenbrett enthaltenen Entfrostungs-/Beschlagfreihaltungsdüse (19) mündet.

3. Anlage nach Anspruch 2, **dadurch gekennzeichnet,** daß das erste Modul außerdem wenigstens einen Kanal (6) enthält, der zu wenigstens einer Belüftungsdüse (7) führt, die im Fußraum der Fahrgäste im vorderen Teil des Fahrzeugs, beiderseits des besagten Gehäuses (1), mündet.

4. Anlage nach einem der Ansprüche 1 bis 3, **dadurch gekennzeichnet,** daß der Träger (17) an seinen Enden erste Befestigungsmittel umfaßt, um den besagten Träger an der Struktur des Fahrzeugs zu sichern.

5. Anlage nach einem der Ansprüche 1 bis 4, **dadurch gekennzeichnet,** daß das Gehäuse (1) außerdem zweite Befestigungsmittel (16) umfaßt, um das besagte erste Modul an den Halterungsmitteln (17) zu sichern.

6. Anlage nach einem der vorangehenden Ansprüche, **dadurch gekennzeichnet,** daß das Armaturenbrett (18) und die integrierten Kanäle (9, 10, 12, 13) und Aufnahmen (23, 25), die es enthält, als Formteil ausgeführt sind.
